# EUROPÄISCHE PATENTSCHRIFT

(11) **EP 1 010 285 B1**
(45) Veröffentlichungstag und Bekanntmachung des Hinweises auf die Patenterteilung: **09.11.2005**
(21) Anmeldenummer: 98949879.5
(22) Anmeldetag: 12.08.1998
(51) Int. Cl.: H04L 1/00, H03M 13/00, H04N 1/333

(54) **VERFAHREN UND KOMMUNIKATIONSSYSTEM ZUR SYNCHRONISATION ZWEIER VORRICHTUNGEN AUF EIN VORGEBBARES DATENÜBERTRAGUNGSVERFAHREN**
METHOD AND COMMUNICATIONS SYSTEM FOR SYNCHRONISING TWO DEVICES TO A PREDETERMINED DATA TRANSMISSION PROCESS
PROCEDE ET SYSTEME DE COMMUNICATION POUR SYNCHRONISER DEUX DISPOSITIFS SUR UN PROCESSUS DE TRANSMISSION DE DONNEES PREDETERMINE

(30) Priorität: 29.08.1997 DE 19737850
(43) Veröffentlichungstag der Anmeldung: 21.06.2000
(73) Patentinhaber: SIEMENS AKTIENGESELLSCHAFT, 80333 München (DE)
(72) Erfinder: KAUP, Andre, D-85635 Höhenkirchen (DE); PANDEL, Jürgen, D-83620 Feldkirchen-Westerham (DE); WIMMER, Bernhard, D-81825 München (DE)
(86) Internationale Anmeldenummer: PCT/DE1998/002328
(87) Internationale Veröffentlichungsnummer: WO 1999/012299

(56) Entgegenhaltungen:
- EP-A- 0 760 562
- WO-A-97/49193
- US-A- 4 701 923
- US-A- 5 440 405
- LINDBERGH D: "THE H.324 MULTIMEDIA COMMUNICATION STANDARD" IEEE COMMUNICATIONS MAGAZINE, Bd. 34, Nr. 12, Dezember 1996, Seiten 46-51, XP000636453
- SCOON A: "To err is computer (Microcom Networking Protocol)" EXE, NOV. 1990, UK, Bd. 5, Nr. 6, Seiten 54, 56, 59-60, XP002092568 ISSN 0268-6872

## Beschreibung

Die Erfindung betrifft die Synchronisation zweier Vorrichtungen auf ein Datenübertragungsverfahren.

Bei der Übertragung von komprimierten Daten, z. B. Audiodaten, textuellen Daten, Videodaten oder auch Steuerinformationsdaten können Fehler in der Übertragung eine anschließende Dekomprimierung derart stören, daß die Daten nicht wieder korrekt rekonstruiert werden.

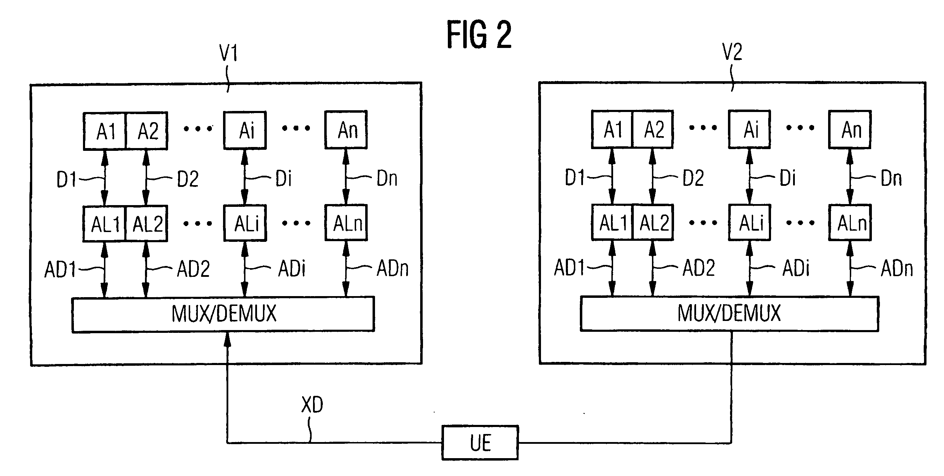

Im Rahmen der Übertragung hochkomprimierter Datenströme ist folgende Architektur eines Kommunikationssystems bekannt, die in Fig. 2 dargestellt ist (vgl. [1]).

Applikationen einer vorgebbaren Anzahl Applikationsscnichten Ai (i=1...n), generieren Daten Di, die von einer ersten Vorrichtung V1 zu einer zweiten Vorrichtung V2 übertragen werden sollen. Die zu übertragenden Daten Di werden jeweils einer sog. Adaptionsschicht ALi, die der jeweiligen Applikation Ai zugeordnet ist, zugeführt.

Die verschiedenen Arten der Adaptionsschichten, die in [1] beschrieben sind, dienen zur Verarbeitung unterschiedlicher charakteristischer Daten.

Unter Daten sind im weiteren beispielsweise Audiodaten, Videodaten, textuelle Daten, insbesondere Daten, die gemäß dem ASCII-Code codiert sind, zu verstehen, allgemein jede Art von Daten, die in digitaler Form übertragen werden können.

Von der jeweiligen Adaptionsschicht ALi werden adaptierte Daten ADi einem Multiplexer MUX/DEMUX, zur Bildung eines zusammengeführten, d.h. gemultiplexten, Datenstroms XD zugeführt.

Über eine Übertragungseinheit UE, beispielsweise ein leitungsgebundenes oder auch ein Mobilfunknetz wird der Datenstrom XD zu der zweiten Vorrichtung V2 übertragen. Die zweite Vorrichtung V2 hat den gleichen Aufbau wie die erste Vorrichtung V1. In der zweiten Vorrichtung V2 wird der gemultiplexte Datenstrom XD wieder in die einzelnen adaptiven Daten ADi aufgeteilt, d.h. gedemultiplext. Die adaptierten Daten ADi werden von dem Multiplexer/Demultiplexer MUX/DEMUX den Elementen der Adaptionsschicht ALi der zweiten Vorrichtung V2 zugeführt. Durch die Doppelpfeile in den einzelnen Kommunikationswegen ist angedeutet, daß die Kommunikation zwischen der ersten Vorrichtung V1 und der zweiten Vorrichtung V2 bidirektional erfolgen kann.

In dem aus [1] bekannten Verfahren wird jeweils für die Daten in der Adaptionsschicht ein eigenes Fehlererkennungsverfahren und/oder Fehlerkorrekturverfahren durchgeführt.

Je hochwertiger oder fehlerrobuster das Fehlererkennungsverfahren bzw. das Fehlerkorrekturverfahren ist, d.h. je mehr Fehler bei der Übertragung erkannt bzw. korrigiert werden können, desto größer wird der Bandbreitenbedarf bei der Übertragung der Datenströme durch zusätzliche Redundanzinformation, die zur Fehlerkorrektur bzw. Fehlererkennung erforderlich ist. Ferner wächst die Komplexität der Fehlererkennungs- bzw. Fehlerkorrekturverfahren mit steigender Leistungsfähigkeit an, was zu einem erhöhten Rechenzeitbedarf sowohl für die Encodierung beim Sender als auch für die Decodierung beim Empfänger führt.

Es ist aus diesem Grund aus den Dokumenten [1], [2], [3], [4] bekannt, verschiedene Fehlererkennungsverfahren bzw. Fehlerkorrekturverfahren vorzusehen, die je nach Anforderung mehr oder weniger fehlerrobust, dafür aber entsprechend weniger oder mehr komplex sind.

In den Druckschriften [1], [2], [3], [4] sind verschiedene, im weiteren als Datenübertragungsverfahren bezeichnete, Verfahren unterschiedlicher Wertigkeit (Level 0 ... 3) definiert. Ein erstes Datenübertragungsverfahren (Level 0), das jedes Gerät implementiert haben muß, ein zweites Datenübertragungsverfahren (Level 1), ein drittes Datenübertragungsverfahren (Level 2) und ein viertes Datenübertragungsverfahren (Level 3). Die Fehlerrobustheit, d.h. die Wertigkeit der Verfahren hinsichtlich des Fehlerschutzes (Fehlererkennung bzw. Fehlerkorrektur) steigt von dem ersten Datenübertragungsverfahren zu dem vierten Datenübertragungsverfahren an.

Jedes Gerät, das gemäß dem aus [1] bekannten Verfahren arbeitet, muß zumindest das erste Datenübertragungsverfahren gewährleisten können. Die weiteren Datenübertragungsverfahren sind optional, was bedeutet, daß verschiedene Geräte miteinander kommunizieren können, die nicht die gleiche Möglichkeit des maximalen Fehlerschutzes implementiert haben. In diesem Fall kann es bei der Kommunikation zu Problemen kommen, da zu Beginn einer Kommunikationsverbindung erst ausgehandelt werden muß, gemäß welchem Datenübertragungsverfahren die Datenübertragung erfolgen soll (Synchronisation auf ein Datenübertragungsverfahren).

Aus der Zeitschrift EXE Magazine, Band 5, Nr. 6, Nov. 1990, Seiten 54-60 ist bekannt, in einer Datenübertragungsvorrichtung verschiedene Fehlererkennungsverfahren bzw. Fehlerkorrekturverfahren vorzusehen. Zu Beginn einer Kommunikationsverbindung wird ausgehandelt, gemäß welchem Fehlerschutzverfahren die Datenübertragung erfolgen soll.

Somit liegt der Erfindung das Problem zugrunde, ein Verfahren und ein Kommunikationssystem zur Synchronisation zweier Vorrichtungen auf ein vorgebbares Datenübertragungsverfahren aus einer Menge von Datenübertragungsverfahren anzugeben, wobei die Synchronisation einfach und automatisch erfolgen kann.

Das Problem wird durch das Verfahren gemäß Patentanspruch 1 sowie durch das Kommunikationssystem gemäß Patentanspruch 6 gelöst.

Eine erste Vorrichtung und eine zweite Vorrichtung tauschen Synchronisationsnachrichten aus, wobei in jeweils einer Synchronisationsnachricht eine Angabe enthalten ist, mit der ein

Datenübertragungsverfahren mit dem höchstwertigen Fehlerschutz gekennzeichnet ist, das die jeweilige Vorrichtung durchführen kann, die die Synchronisationsnachricht gesendet hat. Von der jeweils empfangenden Vorrichtung wird aus der empfangenen Synchronisationsnachricht das Datenübertragungsverfahren der jeweiligen Synchronisationsnachricht ermittelt. Von der Vorrichtung, von der das jeweils ermittelte Datenübertragungsverfahren durchgeführt werden kann, wird eine weitere Synchronisationsnachricht gebildet und an die jeweils andere Vorrichtung übertragen, wobei die weitere Synchronisationsnachricht das Datenübertragungsverfahren kennzeichnet, das beide Vorrichtungen durchführen können. Aus der weiteren Synchronisationsnachricht wird das Datenübertragungsverfahren der weiteren Synchronisationsnachricht ermittelt. Nun sind die Vorrichtungen auf das ermittelte Datenübertragungsverfahren synchronisiert.

Das Kommunikationssystem gemäß Patentanspruch 6 weist eine erste Vorrichtung und eine zweite Vorrichtung auf, die derart eingerichtet sind, daß
- eine erste Vorrichtung und eine zweite Vorrichtung Synchronisationsnachrichten austauschen, wobei in jeweils einer Synchronisationsnachricht eine Angabe enthalten ist, mit der ein Datenübertragungsverfahren mit dem höchstwertigen Fehlerschutz gekennzeichnet ist, das die jeweilige Vorrichtung durchführen kann, die die Synchronisationsnachricht gesendet hat,
- von der jeweils empfangenden Vorrichtung aus der empfangenen Synchronisationsnachricht das Datenübertragungsverfahren der jeweiligen Synchronisationsnachricht ermittelt wird,
- von der Vorrichtung, von der das jeweils ermittelte Datenübertragungsverfahren durchgeführt werden kann, eine weitere Synchronisationsnachricht gebildet und an die jeweils andere Vorrichtung übertragen wird, wobei die weitere Synchronisationsnachricht das Datenübertragungsverfahren kennzeichnet, das beide Vorrichtungen durchführen können,
- aus der weiteren Synchronisationsnachricht das Datenübertragungsverfahren der weiteren Synchronisationsnachricht ermittelt wird,
- die Vorrichtungen auf das ermittelte Datenübertragungsverfahren synchronisiert sind.

Es wird somit eine Synchronisationsmöglichkeit angegeben, mit der ohne zusätzliche Komplexität erreicht wird, zwei Vorrichtungen hinsichtlich des zu verwendenden Datenübertragungsverfahrens zu synchronisieren und somit eine gemeinsame Basis für die weitere Kommunikation aufzubauen.

Ein weiterer Vorteil der Erfindung ist darin zu sehen, daß die Erfindung ohne weiteres erweiterbar ist auf zukünftige, in der jeweiligen Realisierung noch nicht definierte Datenübertragungsverfahren. Durch die Erfindung ist somit auch bei zukünftiger Weiterentwicklung der Datenübertragungsverfahren automatisch immer eine Abwärtskompatibilität mit den "älteren Geräten" gewährleistet.

Die Erfindung kann anschaulich darin gesehen werden, daß die Vorrichtungen Synchronisationsnachrichten austauschen, die jeweils angeben, welches Datenübertragungsverfahren maximal von der jeweiligen Vorrichtung unterstützt wird. Aufgrund der Art der Synchronisationsnachricht erkennt die empfangende Vorrichtung das angegebene Datenübertragungsverfahren und, wenn ihr eigenes, vorgeschlagenes Datenübertragungsverfahren hochwertiger ist als das, das von der anderen Vorrichtung vorgeschlagen wurde, wird automatisch das Datenübertragungsverfahren der nicht so leistungsfähigen Vorrichtung gewählt und als Quittung wird eine Synchronisationsnachricht gebildet und gesendet, die das gewählte Datenübertragungsverfahren enthält.

Vorteilhafte Weiterbildungen der Erfindung ergeben sich aus den abhängigen Ansprüchen.

Um die Verläßlichkeit der Ermittlung des Datenübertragungsverfahrens aus der Synchronisationsnachricht bei der empfangenden Vorrichtung jeweils zu erhöhen, ist es vorteilhaft, daß eine Vorrichtung eine Synchronisationsnachricht mehrmals sendet und die empfangende Vorrichtung das Datenübertragungsverfahren als erkannt interpretiert, wenn es mehrfach gleich ermittelt wurde.

Ein Ausführungsbeispiel der Erfindung ist in den Figuren dargstellt und wird im weiteren näher erläutert.

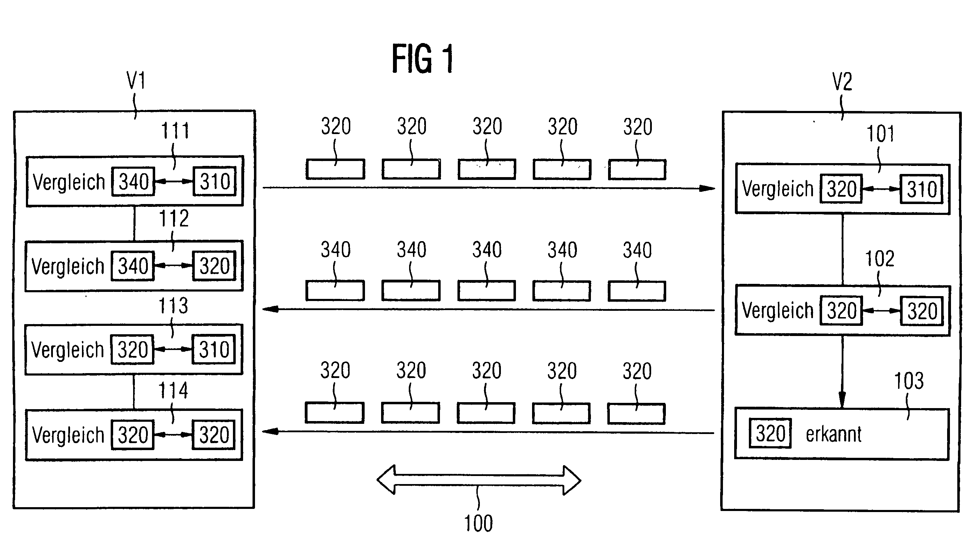

Es zeigen
- Fig. 1: eine Skizze eines Nachrichtenflußdiagramms, das den Austausch der Nachrichten zwischen der ersten und der zweiten Vorrichtung beschreibt;
- Fig. 2: ein Blockdiagramm, das die Architektur der Vor- richtungen gemäß dem aus [1] bekannten Verfahren beschreibt;
- Fig. 3a bis 3d: eine Skizze, in der die Datenformate der Nachrichten gemäß den unterschiedlichen Datenübertragungsverfahren dargestellt ist.

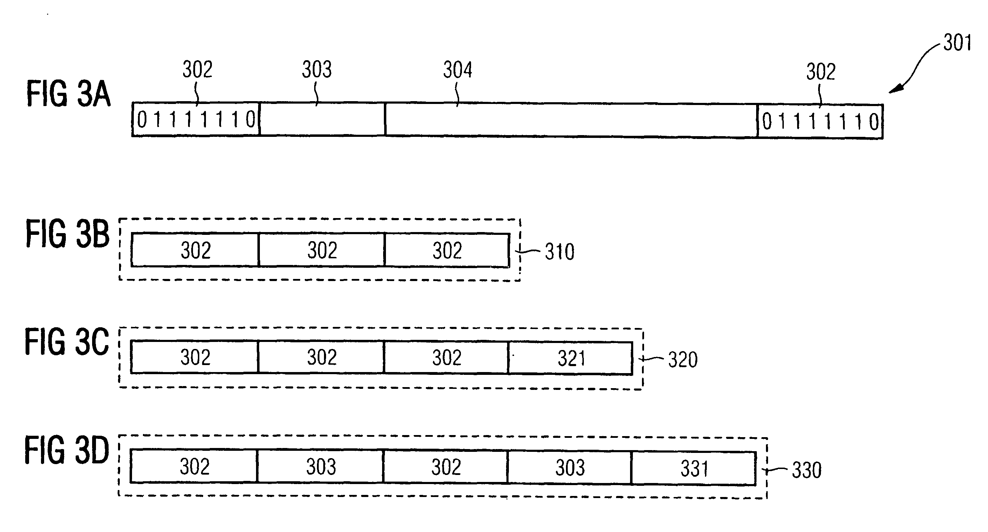

Fig. 3a und 3d zeigen das Datenformat der verschiedenen Datenübertragungsverfahren, die in [1], [2], [3], und [4] beschrieben sind.

Das erste Übertragungsverfahren (Level 0), das gemäß dem H.223-Standard ausgestaltet ist, weist folgende Struktur von Datenpaketen 301 (vgl. Figur 3a), in die die gemultiplexten Daten XD unterteilt werden, auf:
- ein innerhalb des Datenpakets 301 eindeutiges Synchronisationswort der Länge 8 Bit, das eindeutig den Beginn eines Datenpakets 301 kennzeichnet;
- eine Steuerinformation 303;
- ein Nutzdatenfeld 304, in dem die zu übertragenden Daten zwischen den Vorrichtungen V1, V2 übertragen werden.

Das Datenpaket 301 wird an dessen Ende wiederum durch ein eindeutiges Synchronisationswort begrenzt.

Bei allen Datenübertragungsverfahren, dem H.223, H.223/Annex A, H.223/Annex B sowie H.223/Annex C ist der grundsätzliche Aufbau des Datenpakets gleich.

Jedoch unterscheiden sich die Formate der Datenpakete in der Länge der ersten beiden Felder des Datenpakets, d.h. in der Länge des Synchronisationsworts 302 und dem Header 303, d.h. der Steuerinformation.

So weist beispielsweise das Synchronisationswort 302 bei dem Verfahren gemäß H.223 und H.223/Annex A jeweils 24 Bit auf und bei dem Verfahren gemäß H.223/Annex B 32 Bit. Das Verfahren gemäß H.223/Annex C weist ebenfalls ein Synchronisationswort 302 von 32 Bit Länge auf.

Für jedes Datenübertragungsverfahren ist ein spezielles Schema vorgesehen, mit dem es ermöglicht wird, Information zu übertragen, falls keine Nutzdaten von den einzelnen Applikationen Ai zu übertragen sind.

Dieses Schema wird im folgenden verwendet und als Stopfsequenz bezeichnet. Im Rahmen des ersten Datenübertragungsverfahren wird als Stopfsequenz eine Folge von 3 Synchronisationsworten der Länge 8 Bit (vgl. Fig. 3b) übertragen.

Fig. 3c zeigt die Stopfsequenz 320, die gemäß dem Verfahren H.223/Annex A eingesetzt wird. Es werden drei Synchronisationsworte 302 der Länge 8 Bit sowie eine 16 Bit lange Pseudonoisesequenz 321 als Stopfsequenz 320 verwendet.

Bei dem Verfahren gemäß H.223/Annex B (vgl. Fig. 3d) wird als Stopfsequenz 330 eine Folge von Synchronisationsworten 302 der Länge 8 Bit, Headerinformation 303, Synchronisationswort 302 der Länge 8 Bit, sowie Headerinformation 303 und eine Pseudonoisesequenz 331 der Länge 32 Bit verwendet. Zur eindeutigen Kennzeichnung der Stopfsequenz 330 gemäß dem Verfahren gemäß H.223/Annex B ist vorgesehen, in dem Headerfeld als Multiplexcode eine Folge von 4 Bit mit dem Wert 0 anzugeben.

Die Kennzeichnung für eine Stopfsequenz (nicht dargestellt) des Verfahrens gemäß H.223/Annex C kann dadurch eindeutig erfolgen, daß in dem Headerfeld 302 der Stopfsequenz des Verfahrens gemäß H.223/Annex B mit gleicher Struktur der Stopfsequenz die 4 Bit des Headerfelds 303, mit denen der Multiplexcode angegeben wird, alle den Wert 1 zugeordnet bekommen.

Somit ist durch Senden der Stopfsequenz jeweils eindeutig das jeweilige Datenübertragungsverfahren gekennzeichnet, auf das sich der Aufbau der Stopfsequenz, 310, 320, 330 jeweils bezieht.

Im weiteren wird zur einfacheren Darstellung folgende Ausgangssituation vorausgesetzt.

Die erste Vorrichtung V1 unterstützt das erste Datenübertragungsverfahren (H.223) und das zweite Datenübertragungsverfahren (H.223/Annex A). Die zweite Vorrichtung V2 unterstützt alle Datenübertragungsverfahren, d.h. das erste Datenübertragungsverfahren (H.223), das zweite Datenübertragungsverfahren (H.223/Annex A), das dritte Übertragungsverfahren (H.223/Annex B) und das vierte Datenübertragungsverfahren (H.223/Annex C).

Zur Synchronisation, d.h. zur Auswahl des für die Datenübertragung von Nutzdaten zu verwendenden Datenübertragungsverfahrens sendet jede Vorrichtung V1, V2 jeweils eine Synchronisationsnachricht, d.h. jeweils die Stopfsequenz, die das höchstwertige Datenübertragungsverfahren hinsichtlich des Fehlerschutzes (Fehlererkennung und/oder Fehlerkorrektur) kennzeichnet, das die jeweilige Vorrichtung V1, V2 unterstützt.

Die erste Vorrichtung V1 sendet also eine erste Synchronisationsnachricht in Form der Stopfsequenz 320, die das zweite Datenübertragungsverfahren kennzeichnet. Um die Verläßlichkeit der Synchronisation zu erhöhen, wird die Stopfsequenz 320 wiederholt gesendet.

Die zweite Vorrichtung V2 sendet die Stopfsequenz 320, die das vierte Datenübertragungsverfahren kennzeichnet.

Die zweite Vorrichtung V2 empfängt die erste Synchronisationsnachricht in mehrfacher Wiederholung und versucht nun, aufgrund der Stopfsequenz 320 das von der ersten Vorrichtung maximal unterstützte Datenübertragungsverfahren zu ermitteln.

Dies geschieht, indem ausgehend von dem ersten Datenübertragungsverfahren (H.223) die erste Synchronisationsnachricht mit dem Datenformat der Stopfsequenz 310, die das erste Datenübertragungsverfahren kennzeichnet, verglichen wird (Schritt 101).

Der Vergleich erfolgt unter Verwendung eines bekannten Korrelators, der in [4] beschrieben ist und wie folgt arbeitet: Mit Hilfe eines Korrelators der Länge L wird untersucht, ob ein vorgegebenes Bitmuster der Länge L in einem Datenstrom enthalten ist. Dies geschieht durch einen bitweisen Vergleich (XOR-Verknüpfung) des vorgegebenen Bitmusters mit L aufeinanderfolgenden Bits des zu vergleichenden Datenstroms. Stimmen alle L Bits überein, d.h. ist die Summe der nach der XOR-Verknüpfung enthaltenen Einsen gleich L, so ist das gesuchte Bitmuster im Datenstrom enthalten. Falls nicht, wird das L Bit lange Suchmuster im Datenstrom verschoben und die Verknüpfung wiederholt. Bei fehlerhafter Übertragung gilt das Bitmuster im Datenstrom auch dann als erkannt, wenn die Zahl der Einsen nach der XOR-Verknüpfung nur unwesentlich geringer ist als L.

Stimmt die Stopfsequenz der ersten Synchronisationsnachricht nicht mit der Stopfsequenz 310 des ersten Datenübertragungsverfahrens überein, so wird die empfangene erste Synchronisationsnachricht mit der Stopfsequenz 320 des zweiten Datenübertragungsverfahrens verglichen. Die Vergleiche werden solange sukzessive weitergeführt, bis die Stopfsequenz aus der ersten Synchronisationsnachricht mit einer Stopfsequenz eines Datenübertragungsverfahrens der zweiten Vorrichtung V2 übereinstimmt (Schritte 102, 103).

Erkennt die zweite Vorrichtung V2 aus der ersten Synchronisationsnachricht die Stopfinformation eines Datenübertragungsverfahrens, das von der zweiten Vorrichtung V2 unterstützt wird, so wird von der zweiten Vorrichtung V2 eine zweite Synchronisationsnachricht gebildet, die ebenfalls die ermittelte Stopfsequenz enthält und die zweite Synchronisationsnachricht wird, ebenfalls mehrfach wiederholt, an die erste Vorrichtung V1 gesendet.

Die zweite Synchronisationsnachricht dient anschaulich als eine Quittung dafür, daß die zweite Vorrichtung V2 das von der ersten Vorrichtung V1 "vorgeschlagene" Datenübertragungsverfahren akzeptiert hat.

Von der ersten Vorrichtung V1 wird die von der zweiten Vorrichtung V2 gesendete dritte Synchronisationsnachricht mit der Stopfinformation 340 des vierten Datenübertragungsverfahrens empfangen.

Auch in der ersten Vorrichtung V1 wird auf die gleiche, oben beschriebene Weise versucht, die Stopfsequenz zu erkennen. Es wird also die Stopfsequenz 340 der dritten Synchronisationsnachricht mit der Stopfsequenz 310 des ersten Datenübertragungsverfahrens verglichen (Schritt 111).

Da diese Stopfsequenzen 310, 340 nicht übereinstimmen, wird in einem weiteren Schritt 112 die Stopfinformation 340 der dritten Synchronisationsnachricht mit der Stopfinformation 320 des zweiten Datenübertragungsverfahrens verglichen.

Da auch dieser Vergleich negativ ausfällt, das zweite Datenübertragungsverfahren jedoch das höchstwertige Datenübertragungsverfahren ist, das von der ersten Vorrichtung V1 unterstützt wird, wird der Vergleich in der ersten Vorrichtung V1 unterbrochen.

Nach Empfang der zweiten Synchronisationsnachricht mit der Stopfsequenz 320 des zweiten Datenübertragungsverfahrens wird jedoch ein neuer Vergleich gestartet zwischen der Stopfsequenz der zweiten Synchronisationsnachricht mit der Stopfsequenz des ersten Datenübertragungsverfahrens (Schritt 113).

Da diese Stopfinformationen nicht übereinstimmen, wird in einem weiteren Vergleich die Stopfsequenz 320 der zweiten Synchronisationsnachricht mit der Stopfsequenz 320 des zweiten Datenübertragungsverfahrens verglichen (Schritt 114). Die ermittelte Übereinstimmung der Stopfsequenz der zweiten Synchronisationsnachricht und der Stopfsequenz 320 des zweiten Datenübertragungsverfahrens führt dazu, daß nunmehr in der ersten Vorrichtung V1 erkannt wurde, welches Datenübertragungsverfahren für die zukünftige Übertragung der Nutzdaten eingesetzt wird.

Die weitere Kommunikation zwischen der ersten Vorrichtung V1 und der zweiten Vorrichtung V2 erfolgt nun gemäß dem synchronisierten, zweiten Datenübertragungsverfahren.

Auf diese Weise wird sehr einfach, ohne Aufwand an zusätzlicher Steuerungsinformation erreicht, daß das höchstwertige, von beiden Vorrichtungen V1 und V2 maximal unterstützte Datenübertragungsverfahren zur Kommunikation, d.h. zur Übertragung der Nutzdaten 100, eingesetzt wird.

Somit fügt sich das erfindungsgemäße Verfahren standardkonform in bestehende Kommunikationsstandards ein.

Durch die Verwendung einer Inband-Signalisierung ist keine Änderung bereits bestehender Kommunikationsstandards, beispielsweise GSM, PSTN oder DECT, erforderlich. In den bestehenden Kommunikationsstandards sind bereits Module enthalten, die die Stopfsequenzen erkennen können. Somit kann auch ohne Erhöhung der Komplexität bestehender Kommunikationsstandards das Verfahren ohne weiteres in bestehende Standardverfahren integriert und implementiert werden.

Im weiteren werden einige Alternativen zu dem oben beschriebenen Ausführungsbeispiel dargestellt.

Es ist beispielsweise in einer Alternative des Ausführungsbeispiels vorgesehen, daß nicht jedesmal, wenn eine neue Synchronisationsnachricht empfangen wird, wieder bei dem niedrigstwertigen Datenübertragungsverfahren mit dem Vergleich der Stopfsequenzen begonnen wird, sondern es ist ebenso möglich, jeweils bei der zuletzt untersuchten Stopfsequenz den neuen Vergleich zu beginnen.

Es ist ferner nicht unbedingt erforderlich, die Vergleiche nacheinander durchzuführen. Sie können ebenfalls parallel durchgeführt werden, wodurch die Geschwindigkeit der Synchronisation erhöht werden kann.

Die Erfindung kann anschaulich darin gesehen werden, daß die Vorrichtungen Synchronisationsnachrichten austauschen, die jeweils angeben, welches Datenübertragungsverfahren maximal von der jeweiligen Vorrichtung unterstützt wird. Aufgrund der Art der Synchronisationsnachricht erkennt die empfangende Vorrichtung das angegebene Datenübertragungsverfahren und, wenn ihr eigenes, vorgeschlagenes Datenübertragungsverfahren hochwertiger ist als das, das von der anderen Vorrichtung vorgeschlagen wurde, wird automatisch das Datenübertragungsverfahren der nicht so leistungsfähigen Vorrichtung gewählt und als Quittung wird eine Synchronisationsnachricht gebildet und gesendet, die das gewählte Datenübertragungsverfahren enthält.

Im Rahmen dieses Dokuments wurden folgende Veröffentlichungen zitiert:
[1] ITU-T Recommandation H.223, Multiplexing Protocol for Low-Bitrate-Multimedia-Communication, 1996
[2] ITU-T Draft Recommandation H.223/Annex A, Multiplexing Protocol for Low-Bitrate-Mobile-Multimedia-Communication Level 1, Draft Version, July 1997
[3] ITU-T Draft Recommandation H.223/Annex B, Multiplexing Protocol for Low-Bitrate-Mobile-Multimedia-Communication Level 2, Draft Version, July 1997
[4] ITU-T Draft Recommandation H.223/Annex C, Multiplexing Protocol for Low-Bitrate-Mobile-Multimedia-Communication Level 3, Draft Version, July 1997

## Patentansprüche

1. Verfahren zur Synchronisation zweier Vorrichtungen (V1, V2) auf ein vorgebbares Datenübertragungsverfahren aus einer Menge von Datenübertragungsverfahren, die sich hinsichtlich des Fehlerschutzes für zu übertragende Daten unterscheiden,
- bei dem eine erste Vorrichtung (V1) und eine zweite Vorrichtung (V2) Synchronisationsnachrichten (320, 340) austauschen, wobei in jeweils einer Synchronisationsnachricht (320) eine Angabe enthalten ist, mit der ein Datenübertragungsverfahren mit dem höchstwertigen Fehlerschutz gekennzeichnet ist, das die jeweilige Vorrichtung durchführen kann, die die Synchronisationsnachricht gesendet hat,
- bei dem von der jeweils empfangenden Vorrichtung (V2) aus der empfangenen Synchronisationsnachricht das Datenübertragungsverfahren der jeweiligen Synchronisationsnachricht ermittelt wird,
- bei dem von der Vorrichtung (V2), von der das jeweils ermittelte Datenübertragungsverfahren durchgeführt werden kann, eine weitere Synchronisationsnachricht (320) gebildet und an die jeweils andere Vorrichtung (V1) übertragen wird, wobei die weitere Synchronisationsnachricht das Datenübertragungsverfahren kennzeichnet, das beide Vorrichtungen durchführen können,
- bei dem aus der weiteren Synchronisationsnachricht (320) das Datenübertragungsverfahren der weiteren Synchronisationsnachricht ermittelt wird,
- bei dem die Vorrichtungen auf das ermittelte Datenübertragungsverfahren synchronisiert sind.

2. Verfahren nach Anspruch 1,
bei dem mindestens eine der Synchronisationsnachrichten eine vorgebbare Anzahl wiederholt übertragen wird.

3. Verfahren nach Anspruch 2,
bei dem das Datenübertragungsverfahren zur Synchronisation verwendet wird, wenn das Datenübertragungsverfahren eine vorgebbare Anzahl oft ermittelt wurde.

4. Verfahren nach einem der Ansprüche 1 bis 3,
bei dem die Ermittlung mindestens eines Datenübertragungsverfahren derart erfolgt, daß beginnend mit dem niedrigstwertigen Datenübertragungsverfahren die Synchronisationsnachricht mit der jeweiligen Kennzeichnung des Datenübertragungsverfahrens verglichen wird.

5. Verfahren nach einem der Ansprüche 1 bis 4, wobei das Verfahren gemäß dem ITU-Standard H.223 eingesetzt wird.

6. Kommunikationssystem zur Synchronisation zweier Vorrichtungen (V1, V2) auf ein vorgebbares Datenübertragungsverfahren aus einer Menge von Datenübertragungsverfahren, die sich hinsichtlich des Fehlerschutzes für die zu übertragenden Daten unterscheiden, bei dem die Vorrichtungen derart eingerichtet sind, dass
- eine erste Vorrichtung (V1) und eine zweite Vorrichtung (V2) Synchronisationsnachrichten (320, 340) austauschen, wobei in jeweils einer Synchronisationsnachricht (320) eine Angabe enthalten ist, mit der ein Datenübertragungsverfahren mit dem höchstwertigen Fehlerschutz gekennzeichnet ist, das die jeweilige Vorrichtung durchführen kann, die die Synchronisationsnachricht gesendet hat,
- von der jeweils empfangenen Vorrichtung (V2) aus der empfangenen Synchronisationsnachricht das Datenübertragungsverfahren der jeweiligen Synchronisationsnachricht ermittelt wird,
- von der Vorrichtung (V2), von der das jeweils ermittelte Datenübertragungsverfahren durchgeführt werden kann, eine weitere Synchronisationsnachricht (320) gebildet und an die jeweils andere Vorrichtung (V1) übertragen wird, wobei die weitere Synchronisationsnachricht (320) das Datenübertragungsverfahren kennzeichnet, das beide Vorrichtungen durchführen können,
- aus der weiteren Synchronisationsnachricht das Datenübertragungsverfahren der weiteren Synchronisationsnachricht ermittelt wird,
- die Vorrichtungen auf das ermittelte Datenübertragungsverfahren synchronisiert sind.

7. Kommunikationssystem nach Anspruch 6,
bei dem mindestens eine der Vorrichtungen derart eingerichtet ist, daß eine Synchronisationsnachricht eine vorgebbare Anzahl wiederholt übertragen wird.

8. Kommunikationssystem nach Anspruch 7,
bei dem mindestens eine der Vorrichtungen derart eingerichtet ist, daß das Datenübertragungsverfahren zur Synchronisation verwendet wird, wenn das Datenübertragungsverfahren eine vorgebbare Anzahl oft ermittelt wurde.

9. Kommunikationssystem nach einem der Ansprüche 6 bis 8,
bei dem die Vorrichtungen derart eingerichtet sind, daß das Verfahren gemäß dem ITU-Standard H.223 eingesetzt wird.

10. Kommunikationssystem nach einem der Ansprüche 6 bis 9,
bei dem mindestens eine der Vorrichtungen als ein mobiles Kommunikationsendgerät ausgestaltet ist.

11. Kommunikationssystem nach einem der Ansprüche 6 bis 10,
bei dem mindestens eine der Vorrichtungen derart eingerichtet ist, daß die Ermittlung mindestens eines Datenübertragungsverfahren derart erfolgt, daß beginnend mit dem niedrigstwertigen Datenübertragungsverfahren die Synchronisationsnachricht mit der jeweiligen Kennzeichnung des Datenübertragungsverfahrens verglichen wird.

## Claims

1. Method for synchronising two devices (V1,V2) to a predeterminable data transmission method from a set of data transmission methods which differ with regard to error protection for data to be transmitted,
- in which a first device (V1) and a second device (V2) exchange synchronisation messages (320,340), wherein one synchronisation message (320) respectively contains information which flags a data transmission method with the most sophisticated error protection that the respective device which has sent the synchronisation message can implement,
- in which the data transmission method of the respective synchronisation message is determined by the respectively receiving device (V2) from the synchronisation message received,
- in which a further synchronisation message (320) is formed by the device (V2) by which the respectively determined data transmission method can be implemented and is transmitted to the other respective device (V1), wherein the further synchronisation message flags the data transmission method which the two devices can implement,
- in which the data transmission method of the further synchronisation message is determined from the further synchronisation message (320),
- in which the devices are synchronised to the data transmission method determined.

2. Method according to claim 1,
in which at least one of the synchronisation messages is transmitted repeatedly a predeterminable number of times.

3. Method according to claim 2,
in which the data transmission method is used for synchronisation when the data transmission method has been determined a predeterminable number of times.

4. Method according to any one of claims 1 to 3,
in which determination of at least one data transmission method is carried out in such a manner that, beginning with the least sophisticated data transmission method, the synchronisation message is compared with the respective flag of the data transmission method.

5. Method according to any one of claims 1 to 4,
wherein the method is used in conformance with the ITU standard H.223.

6. Communication system for synchronising two devices (V1,V2) to a predeterminable data transmission method from a set of data transmission methods which differ with regard to error protection for the data to be transmitted, in which the devices are configured in such a manner that
- a first device (V1) and a second device (V2) exchange synchronisation messages (320,340), wherein one synchronisation message (320) in each case contains information which flags a data transmission method with the most sophisticated error protection that the respective device which has sent the synchronisation message can implement
- the data transmission method of the respective synchronisation message is determined by the respectively receiving device (V2) from the synchronisation message received,
- a further synchronisation message (320) is formed by the device (V2) by which the respectively determined data transmission method can be implemented and is transmitted to the other respective device (V1), wherein the further synchronisation message (320) flags the data transmission method which the two devices can implement,
- the data transmission method of the further synchronisation message is determined from the further synchronisation message,
- the devices are synchronised to the data transmission method determined.

7. Communication system according claim 6,
in which at least one of the devices is configured in such a manner that a synchronisation message is transmitted repeatedly a predeterminable number of times.

8. Communication system according to claim 7,
in which at least one of the devices is configured in such a manner that the data transmission method is used for synchronisation when the data transmission method has been determined a predeterminable number of times.

9. Communication system according to any one of claims 6 to 8,
in which the devices are configured in such a manner that the method is used in conformance with ITU standard H.223.

10. Communication system according to any one of claims 6 to 9,
in which at least one of the devices is fashioned as a mobile communication terminal.

11. Communication system according to any one of claims 6 to 10,
in which at least one of the devices is configured such that determination of at least one data transmission method is carried out in such a manner that, beginning with the least sophisticated data transmission method, the synchronisation message is compared with the respective flag of the data transmission method.

## Revendications

1. Procédé pour synchroniser deux dispositifs (V1, V2) sur un processus de transmission de données prédéterminé à partir d'une quantité de processus de transmission de données qui se différencient en ce qui concerne la protection contre les erreurs pour les données à transmettre,
- dans lequel un premier dispositif (V1) et un deuxième dispositif (V2) échangent des messages de synchronisation (320, 340), une indication étant respectivement contenue dans un message de synchronisation (320), au moyen de laquelle est caractérisé un processus de transmission de données avec la protection contre les erreurs de plus fort poids, lequel processus peut être exécuté par le dispositif respectif ayant émis le message de synchronisation,
- dans lequel le processus de transmission de données du message de synchronisation respectif est déterminé par le dispositif respectivement récepteur (V2) à partir du message de synchronisation reçu,
- dans lequel un autre message de synchronisation (320) est formé par le dispositif (V2), par lequel le processus de transmission de données respectivement déterminé peut être exécuté, et est transmis à l'autre dispositif respectif (V1), l'autre message de synchronisation caractérisant le processus de transmission de données, que les deux dispositifs peuvent exécuter,
- dans lequel le processus de transmission de données de l'autre message de synchronisation est déterminé à partir de l'autre message de synchronisation (320),
- dans lequel les dispositifs sont synchronisés sur le processus de transmission de données déterminé.

2. Procédé selon la revendication 1,
dans lequel au moins l'un des messages de synchronisation est transmis en répétition un nombre de fois prédéfini.

3. Procédé selon la revendication 2,
dans lequel le processus de transmission de données est utilisé pour la synchronisation lorsque le processus de transmission de données a été souvent déterminé un nombre de fois prédéfini.

4. Procédé selon l'une quelconque des revendications 1 à 3,
dans lequel la détermination d'au moins un processus de transmission de données est effectuée de telle manière que, commençant par le processus de transmission de données de plus faible poids, le message de synchronisation est comparé au critère respectif du processus de transmission de données.

5. Procédé selon l'une quelconque des revendications 1 à 4, le procédé selon la norme ITU H.223 étant appliqué.

6. Système de communication pour la synchronisation de deux dispositifs (V1, V2) sur un processus de transmission de données prédéterminé à partir d'une quantité de processus de transmission de données qui se différencient en ce qui concerne la protection contre les erreurs pour les données à transmettre, dans lequel les dispositifs sont configurés de telle manière qu'
- un premier dispositif (V1) et un deuxième dispositif (V2) échangent des messages de synchronisation (320, 340), une indication étant respectivement contenue dans un message de synchronisation (320), au moyen de laquelle est **caractérisé** un processus de transmission de données avec la protection contre les erreurs de plus fort poids, lequel processus peut être exécuté par le dispositif respectif ayant émis le message de synchronisation,
- dans lequel le processus de transmission de données du message de synchronisation respectif est déterminé par le dispositif respectivement récepteur (V2) à partir du message de synchronisation reçu,
- dans lequel un autre message de synchronisation (320) est formé par le dispositif (V2), par lequel le processus de transmission de données respectivement déterminé peut être exécuté, et est transmis à l'autre dispositif respectif (V1), l'autre message de synchronisation (320) caractérisant le processus de transmission de données, que les deux dispositifs peuvent exécuter,
- dans lequel le processus de transmission de données de l'autre message de synchronisation est déterminé à partir de l'autre message de synchronisation,
- dans lequel les dispositifs sont synchronisés sur le processus de transmission de données déterminé.

7. Système de communication selon la revendication 6,
dans lequel au moins l'un des dispositifs est configuré de telle manière qu'un message de synchronisation est transmis en répétition un nombre de fois prédéfini.

8. Système de communication selon la revendication 7,
dans lequel au moins l'un des dispositifs est configuré de telle manière que le processus de transmission de données est utilisé pour la synchronisation lorsque le processus de transmission de données a été souvent déterminé un nombre de fois prédéfini.

9. Système de communication selon l'une quelconque des revendications 6 à 8,
dans lequel les dispositifs sont configurés de telle manière que le procédé selon la norme ITU H.223 est appliqué.

10. Système de communication selon l'une quelconque des revendications 6 à 9,
dans lequel au moins l'un des dispositifs est exécuté comme un terminal de communication mobile.

11. Système de communication selon l'une quelconque des revendications 6 à 10,
dans lequel au moins l'un des dispositifs est configuré de telle manière que la détermination d'au moins un processus de transmission de données est effectuée de telle manière que, commençant par le processus de transmission de données de plus faible poids, le message de synchronisation est comparé au critère respectif du processus de transmission de données.
